# NEW EUROPEAN PATENT SPECIFICATION

(11) **EP 1 235 879 B2**
(45) Date of publication and mention of the opposition decision: **25.08.2010**
(45) Mention of the grant of the patent: 19.05.2004
(21) Application number: 00978642.7
(22) Date of filing: 14.11.2000
(51) Int. Cl.: C08L 75/04, C08L 23/10

(54) **COMPATIBILIZED RESIN BLENDS AND THE PREPARATION THEREOF**
KOMPATIBILISIERTE HARZ-ZUSAMMENSETZUNGEN UND DEREN HERSTELLUNG
MELANGES DE RESINES RENDUES COMPATIBLES ET LEUR PREPARATION

(30) Priority: 18.11.1999 US 166229 P
(43) Date of publication of application: 04.09.2002
(73) Proprietor: DOW GLOBAL TECHNOLOGIES INC., Midland MI 48674 (US)
(72) Inventor: FARAH, Hani, Sugarland, TX 77479 (US); LERMA, Francisco, Jr., Pearland, TX 77581 (US)
(74) Representative: Raynor, John
(86) International application number: PCT/US2000/031279
(87) International publication number: WO 2001/036535

(56) References cited:
- EP-A- 0 347 794
- EP-A- 0 353 673
- EP-A- 0 732 349
- EP-A- 0 837 097
- EP-A- 0 837 097
- WO-A-00/63293
- WO-A-93/02113
- GB-A- 1 440 030
- US-A- 4 423 185
- US-A- 5 668 217
- STUTZ, HERBERT ET AL: "Chemical reactions during reactive blending of polyurethanes. Fiction or reality?" MACROMOL. SYMP. (1996), 112(FIFTH EUROPEAN SYMPOSIUM ON POLYMER BLENDS, 1996), 151-158 , 1996, XP000984844

## Description

This invention relates to compatibilized resin blends of normally incompatible polymers and the preparation of such blends.

Compatibilizers for blends of certain polymers are known in the art. For example, U.S. Patent 5,959,032 (Evans et al.) describes the preparation of a compatibilizer (for polypropylene and a thermoplastic polyolefin) which is the reaction product of an anhydride functionalized polypropylene and a polyetheramine.

JP Patent Application No. 3-231963 discloses a blend of a thermoplastic polyurethane and a polyolefin that is compatibilized with a polyolefin modified with carboxyl groups, anhydride groups, and/or epoxy groups. The compatibilized blend is reported to have high heat-resistance, high mechanical strength, and high wear resistance.

The compatiblized blends of the prior art generally suffer from having undesirably low weldline strength, which is important for applications such as automotive instrument panels or bumper beams, the manufacture of which generally requires multiple gate or complex injection molding design. Accordingly, it would be desirable to have available a compatibilizer that addresses this deficiency.

EP 837,097 discloses blends of TPU with polyolefins functionalized with isocyanate-reactive groups different than the functionalized imide of the present invention.

Macromol. Symp. (1996), 112 (Fifth European Symposium On Polymer Blends, 1996) teaches the compatibilization of polyurethanes with functionalized polymers such as maleic anhydride functionalized polypropylene.

EP 347,794 and US 4,423,185 disclose compatibilized blends of polyolefins and TPU's through a polyolefin modified with carboxylic acids and acid salts, esters, hydroxyl groups, epoxy groups, amides, and acyloxy groups.

GB 1,440,030 discloses promoting mixing or adhesion of incompatible thermoplastic polymers with a polyolefin or a polystyrene modified with acid, ester, or anhydride groups.

EP 353,673 discloses blends of polyurethane and a carbonyl-modified polyolefin.

US 5,668,217 and WO 93/02113 disclose amino functionalized polypropylenes but they are not used to compatibilize blends with TPU.

A first aspect of the present invention is a composition comprising a blend or reactive product of a) a thermoplastic polyurethane, and b) a compatibilizer, which is a first polymeric hydrocarbon that contains pendant isocyanate-reactive groups or polyoxyalkylene groups having the following structure: 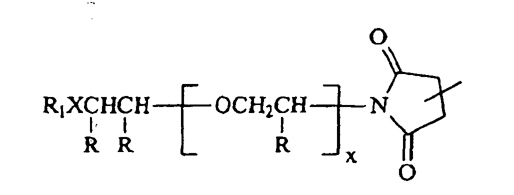 where X is NH or O; R₁ is H or C₁-C₄ alkyl; each R is independently H, -CH₃, or -CH₂CH₃ and x is from 0 to 50 and wherein the polymeric hydrocarbon is selected from polypropylene, high density polyethylene, low density polyethylene, linear low density polyethylene, and substantially linear ethylene/α-olefin copolymers, and optionally, c) a second polymeric hydrocarbon, selected from polypropylene, high density polyethylene, low density polyethylene, linear low density polyethylene, substantially linear ethylene/α-olefin copolymers, polystyrene, poly-α-methylstyrene, polyvinyltoluene, and ethylene-styrene interpolymer.

Preferably, the first polymeric hydrocarbon is selected from the group consisting of polypropylene, high density polyethylene, low density polyethylene, linear low density polyethylene, and substantially linear ethylene/α-olefin copolymers and wherein the concentration of the pendant groups is not less than 0. 1 weight percent, and not more than 2 weight percent, based on the weight of the compatibilizer.

It is further preferred that the thermoplastic polyurethane is an engineering thermoplastic polyurethane having a T_{g} of greater than 50° C, the first polymeric hydrocarbon is polypropylene or an ethylene-1-octene copolymer, x is 0, and R₁ are R are each H. In an alternative preferred embodiment, the thermoplastic polyurethane is a soft thermoplastic polyurethane having a T_{g} of less than 25° C, R₁ is methyl and R is H.

It is preferred that the composition includes a second polymeric hydrocarbon selected from the group consisting of polypropylene, high density polyethylene, low density polyethylene, linear low density polyethylene, substantially linear ethylene/α-olefin copolymers, polystyrene, poly-α-methylstyrene, polyvinyltoluene, and ethylene-styrene interpolymer.

In a second aspect, the present invention is a composition comprising a blend or reactive mixture of a) a thermoplastic polyurethane, and b) a compatibilizer, which is a first polymeric hydrocarbon that contains pendant isocyanate reactive groups or polyoxyalkylene groups having the following structure: 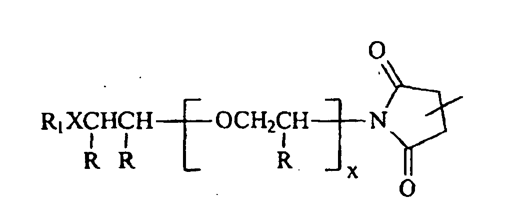 where X is NH or O; R₁ is H or C₁-C₄ alkyl; each R is independently H, -CH₃, or -CH₂CH₃; and where x is from 0 to 50., and c) a second polymeric hydrocarbon, wherein the first and second polymeric hydrocarbons are each independently selected from the group consisting of polypropylene, high density polyethylene, low density polyethylene, linear low density polyethylene, substantially linear ethylene/α-olefin copolymers, polystyrene, poly-α-methylstyrene, polyvinyltoluene, and ethylene-styrene interpolymer.

Preferably, the thermopastic polyurethane is an engineering thermoplastic polyurethane having a T_{g} of greater than 50° C, the second polymeric hydrocarbon is polypropylene, ethylene-1-octene copolymer, or high density polyethylene, and the compatibilizer is polypropylene, ethylene-1-octene copolymer, or high density polyethylene containing pendant isocyanatc reactive groups at a concentration of not less than 0.1 weight percent, and not more than 2 weight percent, based on the weight of the compatibilizer, with the proviso that when the second polymeric hydrocarbon is polypropylene, the compatibilizer contains polypropylene.

Preferably, the composition further includes a second engineering thermoplastic selected from the group consisting of polyester, polycarbonate, polyamide, polyoxymethylene, polysulfone, polyarylate, polyarylene oxide, polyvinyl alcohol, polyvinyl acetate, ethylene-vinyl acetate copolymer, ethylene-vinyl alcohol copolymer, and palyether lactone, and wherein the thermoplastic polyurethane is an engineering thermoplastic polyurethane having a T_{g} of more than 50° C.

A third aspect of the present invention is a method of preparing a compatibilizing composition comprising the step of compounding under reactive conditions a) a thermoptastic polyurethane, and b) a compatibilizer, which is a first polymeric hydrocarbon that contains isocyanate reactive groups wherein the compatibilizer contains pendant isocyanate-reactive groups having the following structure: 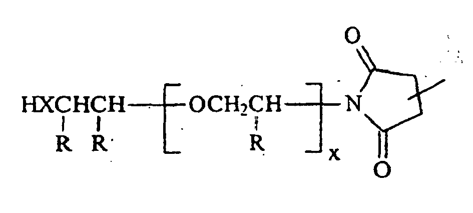 where X is NH or O, each R is independently H, -CH₃, or -CH₂CH₃; and where x is from 0 to 50, wherein the concentration of the pendant groups is not less than 0.1 weight percent, and not more than 2 weight percent, based on the weight of the compatibilizer.

In a preferred embodiment of this method, the thermoplastic polyurethane is an engineering thermoplastic polyurethane having a T_{g} of greater than 50° C, wherein x is 0, and R is H, which method further includes the step of compounding a second polymeric hydrocarbon along with the thermoplastic polyurethane and the compatibilizer, where the concentration of the thermoplastic polyurethane added to the blend is from I to 10 weight percent, based on the weight of the compatibilizer, the thermoplastic polyurethane, the second polymeric hydrocarbon, and the second engineering thermoplastic; and where the concentration of the compatibilizer added to the blend is from I to 10 percent, based on the weight of the compatibilizer, the thermoplastic polyurethane, the second polymeric hydrocarbon. and the second engineering thermoplastic.

The comparabilizer is advantageously prepared by contacting under reactive conditions a) a first polymeric hydrocarbon having pendant or incorporated amine-reactive groups with either b) a compound that contains at least one amine group and at least one isocyanate-reactive group; or c) a compound that contains an amine group and polyoxyalkylene group.

As used herein, the term polymeric hydrocarbon refers to a polyolefin, a polymer of an alkenyl aromatic hydrocarbon, or a polymer prepared from olefinic and alkenyl aromatic hydrocarbon monomers. The term isocyanate-reactive group refers to a group that reacts with an isocyanate group, preferably an amino group or hydroxyl group.

Examples of polyolefins include polypropylene, high density polyethylene (HDPE), low density polyethylene (LDPE), linear low density polyethylene (LLDPE), or substantially linear ethylene/α-olefin copolymers such as those copolymers described in U.S. Patents 5,272,236 and 5,278,272. Examples of polymers of alkenyl aromatic hydrocarbons include polymers of styrene, α-methylstyrene, and vinyltoluene. An example of a polymer prepared from olefinic and alkenyl aromatic hydrocarbon monomers is ethylene-styrene interpolymer.

Amine-reactive groups can be made pendant to the backbone of the first polymeric hydrocarbon by grafting an ethylenically unsaturated amine-reactive compound onto the backbone of the polymeric hydrocarbon. Alternatively, amine-reactive groups can be incorporated into the backbone of the polymeric hydrocarbon by copolymerization of the olefin or alkenyl aromatic hydrocarbon monomer or both with an ethylenically unsaturated amine-reactive compound. Grafting is a preferred means of incorporating the amine-reactive groups into the polymeric hydrocarbon.

As used herein, the term "ethylenically unsaturated amine-reactive compound" refers to a compound that a) can be attached to the polymeric hydrocarbon by grafting or copolymerization and b) is chemically reactive with an amine. Similarly, the term "amine-reactive group" is used herein to refer to the remnant formed by grafting or copolymerization. Examples of ethylenically unsaturated amine-reactive compounds that can be grafted onto the polymeric hydrocarbon backbone or copolymerized with the olefin or alkenyl aromatic hydrocarbon monomer include ethylenically unsaturated carboxylic acids such as maleic acid, fumaric acid, itaconic acid, acrylic acid, methacrylic acid, and crotonic acid; acid anhydrides such as maleic anhydride and itaconic anhydride; vinyl benzyl halides such as vinyl benzyl chloride and vinyl benzyl bromide: alkyl acrylates and methacrylates such as methyl acrylate, ethyl acrylate, butyl acrylate, lauryl acrylate, methyl methacrylate, ethyl methacrylate, butyl methacrylate, and lauryl methacrylate; and ethylenically unsaturated oxiranes such as glycidyl acrylate, glycidyl methacrylate, and glycidyl ethacrylate. Preferred ethylenically unsaturated amine-reactive compounds include maleic anhydride, acrylic acid, methacrylic acid, glycidyl acrylate, glycidyl methacrylate, with maleic anhydride being more preferred. Polypropylene grafted with maleic anhydride is a more preferred modified polymeric hydrocarbon. An example of a commercially available modified polymeric hydrocarbon is EPOLENE™ PP 3003 wax (a trademark of Eastman Chemical Co), which is a propropylene wax that contains from about 0.5 to I weight percent grafted maleic anhydride units.

The degree of incorporation or grafting of the amine-reactive group is application dependent, but is preferably not more than 10 weight percent, more preferably not more than 5 weight percent, more preferably not more than 2 weight percent, and most preferably not more than I weight percent; and preferably not less than 0.01 weight percent, more preferably not less than 0.1 weight percent, and most preferably not less than 0.2 weight percent, based on the weight of the compatibilizer.

The hydroxylamine is a compound containing an amine group and one hydroxyl group. The amine can be a primary or a secondary amine, and is preferably a primary amine. The polyamine is a compound that contains two amine groups. The hydroxylamine or polyamine is represented by the following formula: 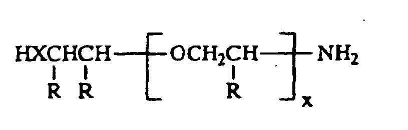 where X is O or NH, where each R is independently H. -CH₃, or -CH₂CH₃; and where x is from 0 to 50. The disclosure and preparation of hydroxyl amines can be found in US Patents 3,231,619, 4,612,335, and 4,888,446, which teachings are incorporated herein by reference. Examples of preferred oxyalkanolamines include 2-aminoethanol, 1-amino-2-propanol, 2-amino-1-propanol, 3-amino-1-propanol, 2-(2-aminoethoxy)ethanol, 1-amino-2-butanol, 2-amino-3-butanol, and polyoxyalkylene glycol amines. 2-Aminoethanol is a preferred alkanolamine.

The polyamine is a compound with two amine groups. Examples of suitable polyamines include α-ω alkylene diamines such as ethylene diamine, 1,3-propylene diamine, 1,4-butylene diamine, and 1,6-hexylene diamine, as well as polyoxyalkylene diamines, commercially available as JEFFAMINE™ polyoxyalkylene diamines (a trademark of Huntsman Petrochemical). Where the amine-reactive groups pendant to the backbone of the first polymeric hydrocarbon are maleic anhydride groups, the compatibilizer prepared using polyamines or alkanolamines contains pendant groups characterized by the following structure: 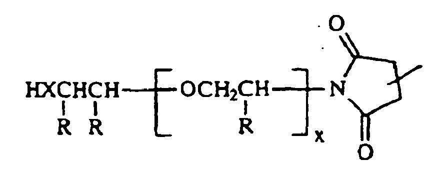 where X is NH or O, each R is independently H, -CH₃, or -CH₂CH₃; and where x is from 0 to 50.

Polyoxyalkylene groups can be incorporated into the backbone of the first polymeric hydrocarbon by reacting the amine-reactive groups with a polyether monoamine such as described by Evans et al. in U.S. Patent 5,959,032, and commercially available as JEFFAMINE™ M-1000 and JEFFAMINE™ 2005 resins (a trademark of Huntsman Chemical). A compatibilizer prepared using polyether monoamines contains pendant groups characterized by the following structure: 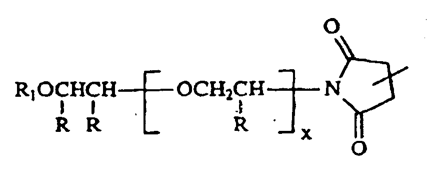 where R₁ C₁-C₄ alkyl, each R is independently H, -CH₃, or -CH₂CH₃; and where x is from 0 to 50.

A stoichiometric excess of the hydroxylamine, polyamine, or polyether monoamine is used so as to ensure complete or substantially complete conversion of the amine-reactive groups.

The thermoplastic polyurethane (TPU) can be an engineering thermoplastic polyurethane or ETPU (also known as a rigid TPU) or a soft TPU. ETPUs have a glass transition temperature (T_{g}) of greater than 50° C and contain less than 25 weight percent of units of a high molecular weight diol (that is, a diol having a molecular weight of not less than 500 amu). Preferably, the units of the high molecular weight diol constitute not more than 10 weight percent of the ETPU, more preferably not more than 5 weight percent of the ETPU, and more preferably not more than 1 weight percent of the ETPU. A most preferred ETPU contains 0 units of the high molecular weight diol.

Examples of commercially available ETPUs include ISOPLAST™ resins (a trademark of The Dow Chemical Company), the preparation of which is disclosed, for example, by Goldwasser et al. in U.S. Patent 4,376,834 and by Oriani in U.S. Patent 5,627,254, which teachings are incorporated herein by reference. The ETPU contains stuctural units of a chain extender such as 1,6-hexanediol or a blend of 1,4-butanediol and a polyethylene glycol. Preferably the chain extender is a blend of 1,4-butanediol and a polyethylene glycol, more preferably 1,4-butanediol and diethylene glycol or triethylene glycol, and most preferably 1,4-butanediol and triethylene glycol.

The TPU may also be a soft TPU having a T_{g} of less than 25° C and a Shore A hardness of not more than 95. An example of a commercially available soft TPU is PELLETHANE™ thermoplastic polyurethane resin. (PELLETHANE is a trademark of The Dow Chemical Company.)

The TPU may be blended or reacted with the compatibilizer. For example, if the compatibilizer contains isocyanate-reactive groups, the blend can be compounded under heat and shear to cause the TPU, particularly the ETPU, to depolymerize to form isocyanate groups and hydroxyl groups. Upon cooling, the isocyanate groups can react with the isocyanate-reactive groups of the compatibilizer to form new urethane linkages. For example, where the compatibilizer is prepared by the reaction of polypropylene grafted with maleic anhydride and 2-aminoethanol or ethylene diamine, the reaction product of the compatibilizer and the ETPU is presumed to have the following structural attribute: 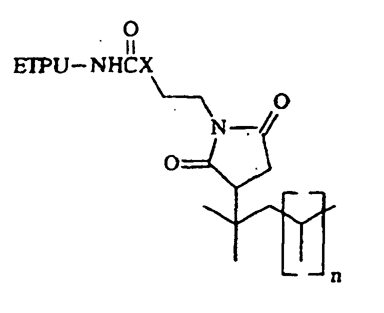 where X is NH or O. Alternatively, if the compatibilizer contains polyoxyalkylene groups that do not react with isocyanate, then the TPU is believed not to react with the compatibilizer.

In the second aspect, the present invention is a composition comprising a blend or reactive mixture of a) the TPU, b) the compatibilizer, and c) a second polymeric hydrocarbon. The composition is preferably either a compatibilized dispersion of the TPU in the second polymeric hydrocarbon matrix, or a dispersion of the second polymeric hydrocarbon in the polyurethane matrix. For a compatibilized dispersion of a TPU in the second polymeric hydrocarbon, the concentration of the TPU, preferably the ETPU is from about 10 to about 40 weight percent, based on the weight of the TPU, the second polymeric hydrocarbon, and the compatibilizer. For a compatibilized dispersion of the second polymeric hydrocarbon in the TPU, preferably the ETPU, the concentration of the second polymeric hydrocarbon in the TPU, is preferably not less than 5 weight percent, and not more than 40, more preferably not more than 30, and most preferably not more than 20 weight percent, based on the weight of the TPU, the second polymeric hydrocarbon, and the compatibilizer.

The amount of compatibilizer used is application dependent, but in general is used at a level sufficient to increase the unnotched izod impact at the weldline or the tensile strength as compared to a second polymeric hydrocarbon and thermoplastic polyurethane blend that contains no compatibilizer. Preferably, the amount of compatibilizer is not less than about 0.5 weight percent, more preferably not less than I weight percent, and most preferably not less than 2 weight percent; and preferably not more than 20 weight percent, more preferably not more than 15 weight percent, and most preferably not more than 10 weight percent, based on the total weight of the second polymeric hydrocarbon, the TPU, and the compatibilizer.

The compatibilizer of the present invention can also be used to form a dispersion of the second polymeric hydrocarbon and a broad range of engineering thermoplastics other than TPU (hereinafter, the second engineering thermoplastic), provided the blend contains a co-compatibilizing amount of a TPU. Examples of other engineering thermoplastics include polyesters such as polyethylene terephthalate (PET) and polybutylene terephthalate (PBT), polycarbonates such as Bisphenol-A-polycarbonate, polyamides such as nylons, polyoxymethylenes such as polyacetals, polysulfones, polyarylates, polyarylene oxides such as polyphenylene oxide (PPO), polyvinyl alcohol, polyvinyl acetate, and ethylene-vinyl acetate copolymer, ethylene-vinyl alcohol copolymer, and polyether lactones.

As used herein, a "co-compatibilizing amount" refers to the amount of TPU required to increase the weldline strength or percent elongation of a composition that contains the second polymeric hydrocarbon, the second engineering thermoplastic, and the compatibilizer as compared to a composition that does not contain the TPU. Preferably, the weight-to-weight ratio of the compatibilizer to the TPU is not less than 1:10, more preferably not less than 1:5, and most preferably not less than 1:2; and preferably not greater than 10:1, more preferably not greater than 5:1, and most preferably not greater than 2:1. When TPU is used as a co-compatibilizer, it is preferably used at a level of not less than 0.1 weight percent, more preferably not less than 1 percent, and most preferably not less than 2 weight percent; and preferably not more than 20 weight percent, and more preferably not more than 10 weight percent, based on the weight of the polymeric hydrocarbon, the second engineering thermoplastic, the TPU, and the compatibilizer.

Although the compatibilizer may be reactively extruded with the TPU before contact with the other engineering thermoplastic and the polyolefin, it is not necessary to do so. The compatibilizer, the second engineering thermoplastic, the polymeric hydrocarbon, and the TPU can be conveniently blended together and reactively extruded at depolymerization temperatures, preferably not less than 180° C, and more preferably not less than 200° C; and preferably not greater than 300° C, and more preferably not greater than 250° C.

The compatibilized blends of the present invention generally exhibit improved properties such as paintability, tensile strength, dart impact and weldline strength as compared to blends that are not compatibilized. These blends are useful in the production of parts for motor vehicles such as bumpers, spoilers, fenders, as well as tools, appliances, sporting goods, and tube connectors.

The following examples are for illustrative purposes only and are not intended to limit the scope of this invention.

### Example 1 - Compatibilization of Polypropylene and a Polyurethane Engineering Thermoplastic Resin

### A. Preparation of the Compatibilizer

A compatibilizer for the polypropylene and polyurethane engineering thermoplastic resin was prepared by tumble blending EPOLENE™ PP 3003 wax (polypropylene grafted with from about 0.5 to about 1 weight percent maleic anhydride) with 2-aminoethanol (1 weight percent) in a plastic bag. The mixture was then extruded through a 34-mm twin screw extruder maintained at 200 rpm and at 220° C. The residence time was about 20 seconds. Conversion of maleic anhydride to the corresponding imide-alkanol was verified by IR spectroscopy.

### B. Preparation of the Compatibilized PP-ISOPLAST Mixture

A portion of the compatibilizer as prepared in step A (5 percent by weight) was tumble mixed with HIDMONT™ PD 701 Polypropylene (a trademark of Hidmont, 65 weight percent), and dried XUS 72301.00L engineering thermoplastic polyurethane (30 weight percent), which was prepared substantially as described in U.S. Patent 5,627,254 by reactive extrusion of 4,4'-diisocyanatodiphenylmethane (68 weight percent), triethylene glycol (16.2 weight percent), 1,4-butanediol (14.6 weight %), tris-nonylphenyl phosphite (0.13 weight percent), FOMREZ™ UL-22 catalyst (trademark of Witco Corporation, 0.06 weight percent), ADVAWAX™ 280 (a trademark of Morton Industries, 0.25 weight percent), IRGANOX™ 1010 stabilizer (trademark of Ciba-Geigy, 0.25 weight percent), and UVTEX™ OB 328 stabilizer (a trademark of Ciba Geigy 0.002 weight percent). The mixture was then compounded in the twin screw extruder at 220° C. The resultant blend was dried in a desiccant drier for 4 hours then cut into 6" x 0.5" x 0.125" (15-cm x 1.3-cm x 0.3-cm) test specimens and molded at 220° C. The weldline strength (tensile strength from butweldline) was 4200 psi (29 Mpa). The elongation to break was found to be 420%.

### Example 2 - Compatibilization of Polyethylene Terephthalate and an Ethylene-Octene Copolymer

High Density Polyethylene grafted with about 0.8 to about 1 weight percent maleic anhydride was compounded with 2-aminoethanol (1 weight percent) on the twin screw extruder at 220° C to form a compatibilizer precursor. A portion of this precursor (5 weight percent), was tumble mixed with TRAYTUF™ 5900 PET (a trademark of Shell Chemical, 70 weight percent), AFFINITY™ 8180 ethylene-octene copolymer (a trademark of The Dow Chemical Company, 20 weight percent), and XUS 72301.00L engineering thermoplastic polyurethane (5 weight percent). The blend was compounded on the twin screw extruder as before. Test specimens were cut and molded as described in Example 1. The unnotched IZOD impact at weldline was found to be 6.5 ft-lb/in (344 J/mm).

### Example 3 - Compatibilization of Polyethylene Terephthalate and High Density Polyethylene

The compatibilizer precursor as prepared in Example 2 (5 weight percent) was tumble mixed with TRAYTUF™ 5900 PET (70 weight percent), LUPOLEN™ L426 1AQ 404 high density polyethylene (a trademark of The Dow Chemical Company, 20 weight percent), and XUS 72301.00L engineering thermoplastic polyurethane (5 weight percent). The blend was compounded on the twin screw extruder as before. The unnotched IZOD impact at weldline was found to be 10.8 ft-lb/in (576.7 J/mm).

### Example 4 - Compatibilization of Polypropylene with a Thermoplastic Polyurethane Elastomer

A compatibilizer for the polypropylene and a thermoplastic polyurethane elastomer was prepared by tumble blending EPOLENE™ PP 3003 wax with JEFFAMINE™ M-2005 polyether monoamine (a trademark of Huntsman Petrochemical Corp., I weight percent) in a plastic bag. The mixture was then extruded through a 34-mm twin screw extruder maintained at 200 rpm and at 220° C. The residence time was about 20 seconds. Conversion of maleic anhydride to the corresponding imide-oxyalkylene was verified by IR spectroscopy. A portion of this compatibilizer was combined with HIDMONT™ PP 701 polypropylene (a trademark of Hidmont Corp., 75 weight percent) and VORANOL™ based TPU XU 63142 (a trademark of The Dow Chemical Company, 20 weight percent). Dart impact at 25° C was found to be 445 in-lbs (27.4 Joules). At 15° C, dart impact was 358 in-lbs (22.1 Joules). At 0° C, dart impact was 338 in-lbs (20.8 Joules). The tensile strength was 3900 psi (26.9 Mpa).

### Example 5 - Compatibilization of Ethylene-Octene Copolymer with a Thermoplastic Polyurethane

A 50:50 weight percent mixture of FUSABOND™ MN-493D resin (a trademark of du Pont de Nemours, 0.5 weight percent grafted ethylene-1-octene copolymer) and AFFINITY™ ethylene-1-octene copolymer (a trademark of The Dow Chemical Company) were compounded and added along with ethylene diamine (0.25% by weight) to a 34-mm twin screw extruder maintained at 200 rpm and 220° C. The residence time was 20 seconds. The ethylene diamine was introduced through as side injection during compounding. Conversion of the maleic anhydride to the corresponding imide was verified by IR spectroscopy. This diluted compatibilizer (4% by weight) was combined with ISOPLAST XUS 72301 engineering thermoplastic polyurethane (88 weight percent) and AFFINITY 8180 ethytene-1-octene copolymer. The unnotched Izod impact value of this composition after molding was 41 ft-lb/in² (2173 J/mm).

## Claims

1. A composition comprising a blend or reactive product of a) a thermoplastic polyurethane, and b) a compatibilizer, which is a first polymeric hydrocarbon that contains pendant isocyanate-reactive groups having the structure: 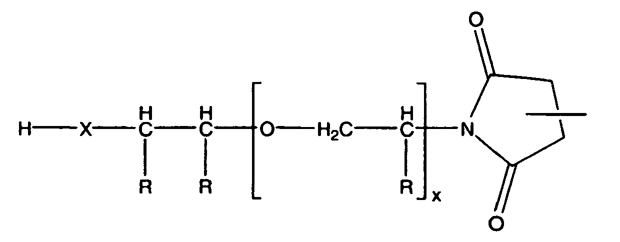 or polyoxyalkylene groups having the structure: 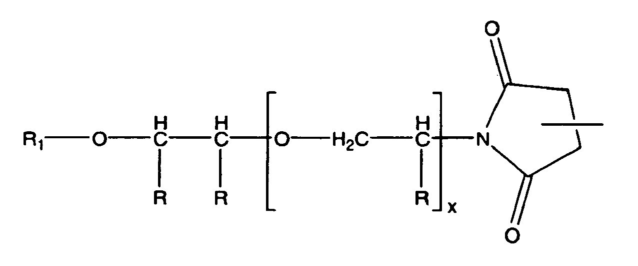 where X is NH or O; R₁ is C₁-C₄ alkyl; each R is independently H, -CH₃, or -CH₂CH₃ and x is from 0 to 50 and wherein the polymeric hydrocarbon is selected from polypropylene, high density polyethylene, low density polyethylene, linear low density polyethylene, and substantially linear ethylene/α-olefin copolymers, and optionally, c) a second polymeric hydrocarbon, selected from polypropylene, high density polyethylene, low density polyethylene, linear low density polyethylene, substantially linear ethylene/α-olefin copolymers, polystyrene, poly-α-methylstyrene, polyvinyltoluene, and ethylene-styrene interpolymer.

2. The composition of Claim 1 wherein the first polymeric hydrocarbon is selected from the group consisting of polypropylene, high density polyethylene, low density polyethylene, linear low density polyethylene, and substantially linear ethylene/α-olefin copolymers and wherein the concentration of the pendant groups is not less than 0.1 weight percent, and not more than 2 weight percent, based on the weight of the compatibilizer.

3. The composition of Claim 2 wherein the thermoplastic polyurethane is an engineering thermoplastic polyurethane having a T_{g} of greater than 50° C, the first polymeric hydrocarbon is polypropylene or an ethytene-1-octene copolymer, x is 0, and R₁ and R are each H.

4. The composition of Claim 2 wherein the thermoplastic polyurethane is a soft thermoplastic polyurethane having a T_{g} of less than 25° C, R₁ is methyl and R is H.

5. The composition of any of Claims 1-4 which further includes a second polymeric hydrocarbon selected from the group consisting of polypropylene, high density polyethylene, low density polyethylene, linear low density polyethylene, substantially linear ethylene/α-olefin copolymers, polystyrene, poly-α-methylstyrene, polyvinyltoluene, and ethylene-styrene interpolymer.

6. A composition comprising a blend or reactive mixture of a) a thermoplastic polyurethane, and b) a compatibilizer, which is a first polymeric hydrocarbon that contains pendant isocyanate-reactive groups having the structure: 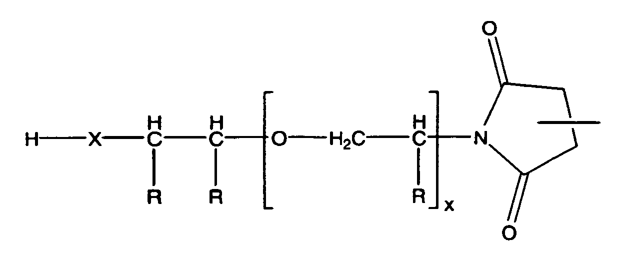 or polyoxyalkylene groups having the structure: 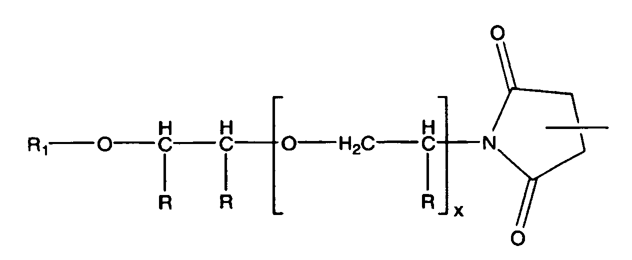 where X is NH or O; R₁ is C₁-C₄ alkyl; each R is independently H, -CH₃, or -CH₂CH₃ and x is from 0 to 50, and c) a second polymeric hydrocarbon, wherein the first and second polymeric hydrocarbons are each independently selected from the group consisting of polypropylene, high density polyethylene, low density polyethylene, linear low density polyethylene, substantially linear ethylene/α-olefin copolymers, polystyrene, poly-α-methylstyrene, polyvinyltoluene, and ethylene-styrene interpolymer.

7. The composition of Claim 6 wherein the thermoplastic polyurethane is an engineering thermoplastic polyurethane having a T_{g} of greater than 50° C, the second polymeric hydrocarbon is polypropylene, ethylene-1-octene copolymer, or high density polyethylene, and the compatibilizer is polypropylene, ethylene-1-octene copolymer, or high density polyethylene containing pendant isocyanate reactive groups at a concentration of not less than 0.1 weight percent, and not more than 2 weight percent, based on the weight of the compatibilizer, with the proviso that when the second polymeric hydrocarbon is polypropylene, the compatibilizer contains polypropylene.

8. The composition of either of Claims 6 or 7 which further includes a second engineering thermoplastic selected from the group consisting of polyester, polycarbonate, polyamide, polyoxymethylene, polysulfone, polyarylate, polyarylene oxide, polyvinyl alcohol, polyvinyl acetate, ethylene-vinyl acetate copolymer, ethylene-vinyl alcohol copolymer, and polyether lactone, and wherein the thermoplastic polyurethane is an engineering thermoplastic polyurethane having a T_{g} of more than 50° C.

9. A method of preparing a compatibilizing composition comprising the step of compounding under reactive conditions a) a thermoplastic polyurethane, and b) a compatibilizer, which.is a first polymeric hydrocarbon that contains isocyanate reactive groups wherein the compatibitizer contains pendant isocyanate-reactive groups having the structure: 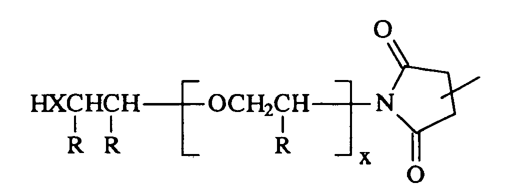 where X is NH or O, each R is independently H, -CH₃, or -CH₂CH₃; and where x is from 0 to 50, wherein the concentration of the pendant groups is not less than 0.1 weight percent, and not more than 2 weight percent, based on the weight of the compatibilizer.

10. The method of Claim 9 wherein the thermoplastic polyurethane is an engineering thermoplastic polyurethane having a T_{g} of greater than 50° C, wherein x is 0, and R is H, which method further includes the step of compounding a second polymeric hydrocarbon along with the thermoplastic polyurethane and the compatibilizer, where the concentration of the thermoplastic polyurethane added to the blend is from 1 to 10 weight percent, based on the weight of the compatibilizer, the thermoplastic polyurethane, and the second polymeric hydrocarbon; and where the concentration of the compatibilizer added to the blend is from 1 to 10 percent, based on the weight of the compatibilizer, the thermoplastic polyurethane, the second polymeric hydrocarbon, and the second engineering thermoplastic.

## Patentansprüche

1. Eine Zusammensetzung, enthaltend einen Blend oder ein reaktives Produkt von a) einem thermoplastischen Polyurethan und b) einem Kompatibilisierungsmittel, welches ein erster polymerer Kohlenwasserstoff ist, der seitenständige mit Isocyanat reaktive Gruppen mit der Struktur: 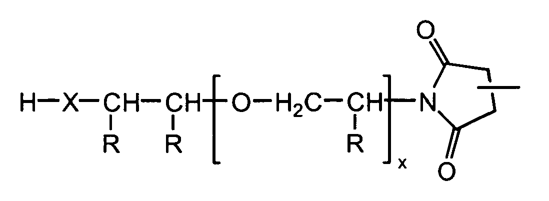 oder Polyoxyalkylen-Gruppen mit der Struktur: 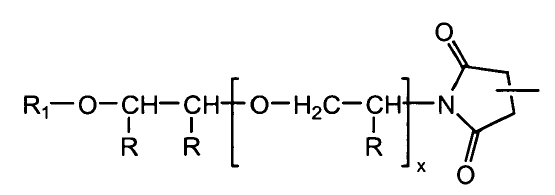 enthält, worin X gleich NH oder O ist; R₁ gleich C₁-C₄-Alkyl ist; jedes R unabhängig voneinander H, -CH₃ oder -CH₂CH₃ ist und x von 0 bis 50 reicht und worin der polymere Kohlenwasserstoff ausgewählt ist aus Polypropylen, Polyethylen hoher Dichte, Polyethylen niedriger Dichte, linearem Polyethylen niedriger Dichte und im Wesentlichen linearen Ethylen/α-Olefin-Copolymeren, und optional c) einem zweiten polymeren Kohlenwasserstoff, ausgewählt aus Polypropylen, Polyethylen hoher Dichte, Polyethylen niedriger Dichte, linearem Polyethylen niedriger Dichte, im Wesentlichen linearen Ethylen/α-Olefin-Copolymeren, Polystyrol, Poly-α-methylstyrol; Polyvinyltoluol und Ethylen-Styrol-Interpolymer.

2. Zusammensetzung nach Anspruch 1, wobei der erste polymere Kohlenwasserstoff ausgewählt ist aus der Gruppe bestehend aus Polypropylen, Polyethylen hoher Dichte, Polyethylen niedriger Dichte, linearem Polyethylen niedriger Dichte und im Wesentlichen linearen Ethylen/α-Olefin-Copolymeren und wobei die Konzentration der seitenständigen Gruppen nicht weniger als 0,1 Gewichtsprozent und nicht mehr als 2 Gewichtsprozent, bezogen auf das Gewicht des Kompatibilisierungsmittels, beträgt.

3. Zusammensetzung nach Anspruch 2, wobei das thermoplastische Polyurethan ein technisches thermoplastisches Polyurethan mit einer T_{g} von größer als 50°C ist, der erste polymere Kohlenwasserstoff Polypropylen oder ein Ethylen/1-Octen-Copolymer ist, x gleich 0 ist und R₁ und R jeweils H sind.

4. Zusammensetzung nach Anspruch 2, wobei das thermoplastische Polyurethan ein weiches thermoplastisches Polyurethan mit einer T_{g} von kleiner als 25°C ist, R₁ gleich Methyl ist und R gleich H ist.

5. Zusammensetzung nach einem der Ansprüche 1 bis 4, die einen zweiten polymeren Kohlenwasserstoff, ausgewählt aus der Gruppe bestehend aus Polypropylen, Polyethylen hoher Dichte, Polyethylen niedriger Dichte, linearem Polyethylen niedriger Dichte, im Wesentlichen linearen Ethylen/α-Olefin-Copolymeren, Polystyrol, Poly-α-methylstyrol, Polyvinyltoluol und Ethylen-Styrol-Interpolymer, enthält.

6. Eine Zusammensetzung, enthaltend einen Blend oder eine reaktive Mischung von a) einem thermoplastischen Polyurethan und b) einem Kompatibilisierungsmittel, welches ein erster polymerer Kohlenwasserstoff ist, der seitenständige mit Isocyanat reaktive Gruppen mit der Struktur: 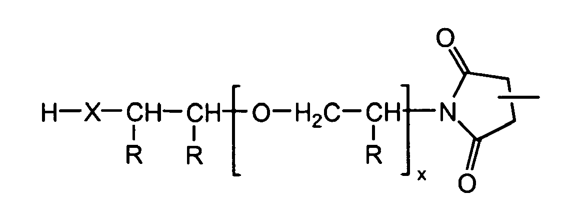 oder Polyoxyalkylen-Gruppen mit der Struktur: 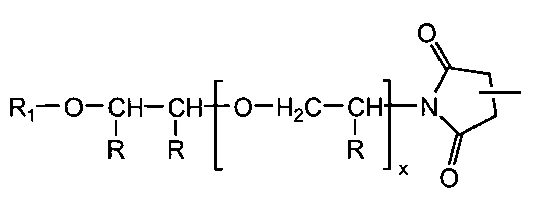 enthält, worin X gleich NH oder O ist; R₁ gleich C₁-C₄-Alkyl ist; jedes R unabhängig voneinander H, -CH₃ oder -CH₂CH₃ ist und worin x von 0 bis 50 reicht, und c) einem zweiten polymeren Kohlenwasserstoff, wobei der erste und zweite polymere Kohlenwasserstoff unabhängig voneinander ausgewählt sind aus der Gruppe bestehend aus Polypropylen, Polyethylen hoher Dichte, Polyethylen niedriger Dichte, linearem Polyethylen niedriger Dichte, im Wesentlichen linearen Ethylen/α-Olefin-Copolymeren, Polystyrol, Poly-α-methylstyrol; Polyvinyltoluol und Ethylen-Styrol-Interpolymer.

7. Zusammensetzung nach Anspruch 6, wobei das thermoplastische Polyurethan ein technisches thermoplastisches Urethan mit einer T_{g} von größer als 50°C ist, der zweite polymere Kohlenwasserstoff Polypropylen, Ethylen/1-Octen-Copolymer oder Polyethylen hoher Dichte ist und das Kompatibilisierungsmittels Polypropylen, Ethylen/1-Octen-Copolymer oder Polyethylen hoher Dichte ist und seitenständige mit Isocyanat reaktive Gruppen in einer Konzentration von nicht weniger als 0,1 Gewichtsprozent und nicht mehr als 2 Gewichtsprozent, bezogen auf das Gewicht des Kompatibilisierungsmittels, enthält, unter der Voraussetzung, dass, wenn der zweite polymere Kohlenwasserstoff Polypropylen ist, das Kompatibilisierungsmittel Polypropylen enthält.

8. Zusammensetzung nach entweder Anspruch 6 oder 7, die ferner einen zweiten technischen Thermoplasten enthält, ausgewählt aus der Gruppe bestehend aus Polyester, Polycarbonat, Polyamid, Polyoxymethylen, Polysulfon, Polyarylat, Polyarylenoxid, Polyvinylalkohol, Polyvinylacetat, Ethy-IenNinylacetat-Copolymer, Ethylen/Vinylalkohol-Copolymer und Polyetherlacton, und wobei das thermoplastische Polyurethan ein technisches thermoplastisches Polyurethan mit einer T_{g} von größer als 50°C ist.

9. Verfahren zur Herstellung einer kompatibilisierenden Zusammensetzung, umfassend den Schritt des Vermischens unter reaktiven Bedingungen von a) einem thermoplastischen Polyurethan und b) einem Kompatibilisierungsmittel, welches ein erster polymerer Kohlenwasserstoff ist, der mit Isocyanat reaktive Gruppen enthält, wobei das Kompatibilisierungsmittel seitenständige mit Isocyanat reaktive Gruppen mit der Struktur: 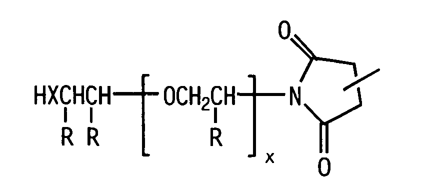 enthält, worin X gleich NH oder O ist; jedes R unabhängig voneinander H, -CH₃ oder -CH₂CH₃ ist und worin x von 0 bis 50 reicht, wobei die Konzentration der seitenständigen Gruppen nicht kleiner als 0,1 Gewichtsprozent und nicht größer als 2 Gewichtsprozent, bezogen auf das Gewicht des Kompatibilisierungsmittels, ist.

10. Verfahren nach Anspruch 9, wobei das thermoplastische Polyurethan ein technisches thermoplastisches Polyurethan mit einer T_{g} von größer als 50°C ist, worin x gleich 0 und R gleich H ist, wobei das Verfahren ferner den Schritt des Vermischens eines zweiten polymeren Kohlenwasserstoffs zusammen mit dem thermoplastischen Polyurethan und dem Kompatibilisierungsmittels umfasst, wobei die Konzentration des thermoplastischen Polyurethans, das zu dem Blend gegeben wird, 1 bis 10 Gewichtsprozent, bezogen auf das Gewicht des Kompatibilisierungsmittels, des thermoplastischen Polyurethans und des zweiten polymeren Kohlenwasserstoffs, beträgt und wobei die Konzentration des Kompatibilisierungsmittels, das zu dem Blend gegeben wird, 1 bis 10 Prozent, bezogen auf das Gewicht des Kompatibilisierungsmittels, des thermoplastischen Polyurethans und des zweiten polymeren Kohlenwasserstoffs beträgt.

## Revendications

1. Composition comprenant un mélange ou un produit réactif de a) un polyuréthane thermoplastique, et b) un agent compatibilisant, qui est un premier hydrocarbure polymère qui contient des groupes réactifs à l'isocyanate pendants ayant la structure suivante: 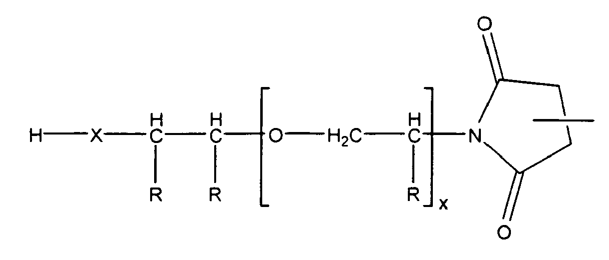 ou des groupes polyoxyalkylène ayant la structure suivante: 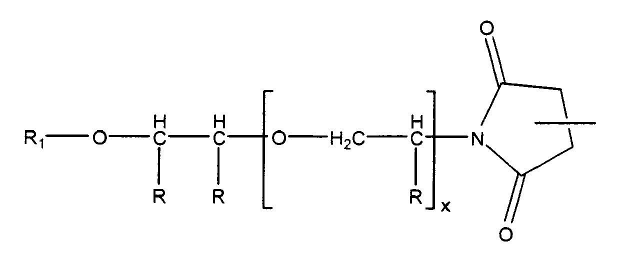 où X est NH ou O; R₁ est H ou un groupe alkyle en C₁-C₄; chaque R est indépendamment H, -CH₃, ou -CH₂CH₃ et x vaut de 0 à 50 et dans laquelle l'hydrocarbure polymère est choisi parmi le polypropylène, le polyéthylène haute densité, le polyéthylène basse densité, le polyéthylène linéaire basse densité, et les copolymères éthylène/α-oléfine sensiblement linéaires et éventuellement, c) un second hydrocarbure polymère, choisi parmi le polypropylène, le polyéthylène haute densité, le polyéthylène basse densité, le polyéthylène linéaire basse densité, les copolymères éthylène/α-oléfine sensiblement linéaires, le polystyrène, le poly-α-méthylstyrène, le polyvinyltoluène, et l'interpolymère éthylène-styrène.

2. Composition selon la revendication 1, dans laquelle le premier hydrocarbure polymère est choisi dans le groupe constitué du polypropylène, du polyéthylène haute densité, du polyéthylène basse densité, du polyéthylène linéaire basse densité, et des copolymères éthylène/α-oléfine sensiblement linéaires, et dans laquelle la concentration des groupes pendants est d'au moins 0,1 pour cent en poids, et d'au plus 2 pour cent en poids, sur la base du poids de l'agent compatibilisant.

3. Composition selon la revendication 2, dans laquelle le polyuréthane thermoplastique est un polyuréthane thermoplastique industriel ayant un T_{g} supérieure à 50° C, le premier hydrocarbure polymère est du polypropylène ou un copolymère éthvlène-1-octène, x vaut 0 et R₁ et R sont chacun H.

4. Composition selon la revendication 2, dans laquelle le polyuréthane thermoplastique est un polyuréthane thermoplastique souple ayant une T_{g} inférieure à 25° C, R₁ est un groupe méthyle et R est H.

5. Composition selon l'une quelconque des revendications 1 à 4, qui comprend en outre un second hydrocarbure polymère choisi dans le groupe constitué du polypropylène, du polyéthylène haute densité, du polyéthylène basse densité, du polyéthylène linéaire basse densité, et des copolymères éthylène/α-oléfine sensiblement linéaires, du polystyrène, du poly-α-méthylstyrène, du polyvinyltoluène, et de l'interpolymère éthylène-styrène.

6. Composition comprenant un mélange ou un mélange reactif de a) un polyuréthane thermoplastique, et b) un agent compatibilisant, qui est un premier hydrocarbure polymère qui contient des groupes réactifs à l'isocyanate pendants ayant la structure suivante: 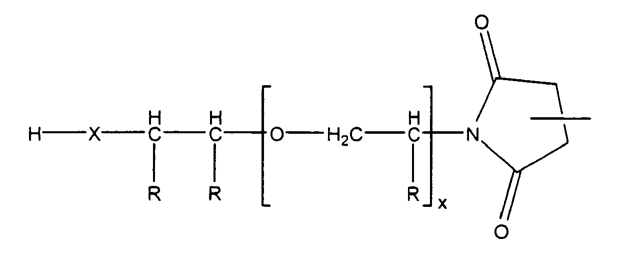 ou des groupes polyoxyalkylène ayant la structure suivante: 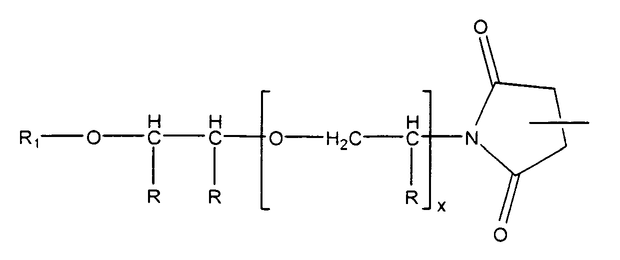 où X est NH ou O; R₁ est H ou un groupe alkyle en C₁-C₄; chaque R est indépendamment H, -CH;, ou -CH₂CH₃ et où x vaut de 0 à 50 et c) un second hydrocarbure polymère dans laquelle les premier et second hydrocarbures polymères sont chacun indépendamment choisis dans le groupe constitué du polypropylène, du polyéthylène haute densité, du polyéthylène basse densité, du polyéthylène linéaire basse densité, des copolymères éthyténe/α-otéfme sensiblement linéaires, du polystyrène, du poly-α-méthylstyrène, du polyvinyltoluène, et de l'interpolymère éthylène-styrène.

7. Composition selon revendication 6, dans laquelle le polyuréthane thermoplastique est un polyuréthane thermoplastique industriel ayant un T_{g} supérieure à 50° C, le second hydrocarbure polymère est du polypropylene, un copolymère éthyléne-1-octéne, ou du polyéthylène haute densité, et l'agent compatibilisant est du polypropylène; un copolymère éthylène-1-octène ou du polyéthylène haute densité contenant des groupes réactifs à l'isocyanate pendants à une concentration d'au moins 0,1 pour cent en poids, et d'au plus 2 pour cent en poids, sur la base du poids de l'agent compatibilisant, à condition que, lorsque le second hydrocarbure polymère est du polypropylène, l'agent compatibilisant contienne du polypropylène.

8. Composition selon l'une quelconque des revendications 6 ou 7, qui comprend en outre un second thermoplastique industriel choisi dans le groupe constitué du polyester, du polycarbonate, du polyamide, du polyoxyméthylène, de la polysulfone, du polyarylate, de l'oxyde de polyarylène, de l'alcool polyvinylique, de l'acétate de polyvinyle, du copolymère éthylène-acétate de vinyle, du copolymère éthylène-alcool vinylique, et de la polyéther lactone, et dans laquelle le polyuréthane thermoplastique est un polyuréthane thermoplastique industriel ayant une T_{g} supérieure à 50° C.

9. Procédé de préparation d'un composition compatibilisante comprenant l'étape consistant à composer dans des conditions réactives a) un polyuréthane thermoplastique et b) un agent compatibilisant, qui est un premier hydrocarbure polymère qui contient des groupes réactifs à l'isocyanate pendants ayant la structure suivante: 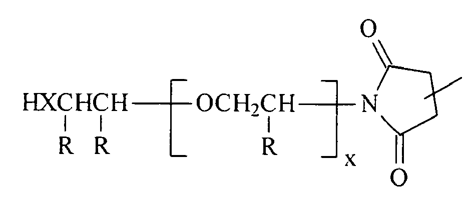 où X est NH ou O, chaque R est indépendamment H, -CH₃, ou -CH₂CH₃; et où x vaut de 0 à 50, dans laquelle la concentration des groupes pendants est d'au moins 0,1 pour cent en poids, et d'au plus 2 pour cent en poids, sur la base du poids de l'agent compatibilisant.

10. Procédé selon la revendication 9, dans laquelle le polyuréthane thermoplastique est un polyuréthane thermoplastique industriel ayant un T_{g} supérieure à 50° C, dans lequel x vaut 0 et R est H, lequel procédé comprend en outre l'étape consistant à composer un second hydrocarbure polymère avec le polyuréthane thermoplastique et l'agent compatibilisant, où la concentration du polyuréthane thermoplastique ajouté au mélange va de 1 à 10 pour cent en poids, sur la base du poids de l'agent compatibisant, du polyuréthane thermoplastique, et du second hydrocarbure polymère, et où la concentration de l'agent compatibilisant ajouté au mélange va de 1 à 10 pour cent en poids, sur la base du poids de l'agent compatibilisant, du polyuréthane thermoplastique, et du second hydrocarbure polymère.
